# NEUE EUROPÄISCHE PATENTSCHRIFT

(11) **EP 0 979 365 B2**
(45) Veröffentlichungstag und Bekanntmachung des Hinweises auf die Entscheidung über den Einspruch: **10.03.2004**
(45) Hinweis auf die Patenterteilung: 11.07.2001
(21) Anmeldenummer: 98925485.9
(22) Anmeldetag: 25.04.1998
(51) Int. Cl.: F16H 57/10

(54) **FAHRZEUGGETRIEBE MIT INTEGRIERTER GEKÜHLTER BREMSE**
AUTOMOTIVE GEARBOX WITH AN INTEGRATED AND COOLED BRAKE
TRANSMISSION A FREIN INTEGRE ET REFROIDISSE

(30) Priorität: 02.05.1997 DE 19718744
(43) Veröffentlichungstag der Anmeldung: 16.02.2000
(73) Patentinhaber: ZF FRIEDRICHSHAFEN Aktiengesellschaft, 88038 Friedrichshafen (DE)
(72) Erfinder: SOLKA, Ulrich, D-94081 Fürstenzell (DE)
(86) Internationale Anmeldenummer: PCT/EP1998/002469
(87) Internationale Veröffentlichungsnummer: WO 1998/050714

(56) Entgegenhaltungen:
- EP-A- 0 722 051
- WO-A-97/49591
- DE-A- 3 222 261
- DE-A- 3 832 649
- DE-A- 3 905 292
- DE-A- 4 300 445
- DE-A- 4 322 517
- DE-A- 4 338 468
- DE-A- 19 523 543
- DE-C- 4 206 087
- FR-A- 2 641 232
- GB-A- 1 464 101
- GB-A- 2 043 186
- GB-A- 2 089 741
- GB-A- 2 220 178
- US-A- 2 920 722
- US-A- 3 115 204
- US-A- 4 181 042
- US-A- 4 655 326
- US-A- 5 024 636
- US-A- 5 397 281
- PATENT ABSTRACTS OF JAPAN vol. 018, no. 393 (M-1643), 22. Juli 1994 & JP 06 109047 A (TOYOTA AUTOM LOOM WORKS LTD), 19. April 1994

## Beschreibung

Die Erfindung bezieht sich auf ein Fahrzeuggetriebe mit integrierter Bremse. Derartige Getriebe können in Endantrieben von Arbeitsmaschinen jeder Art, z. B. Radlader oder Flurförderfahrzeuge, Rad- oder Kettenfahrzeugen Anwendung finden. In der deutschen Patentschrift DE 2 907 138 ist ein Planetengetriebe als Endantrieb in einem Radkopf offenbart. Bei der in dieser Schrift beschriebenen Triebachse ist allerdings eine Lamellenbremse auf das Achsbrückengehäuse aufgesetzt. Die Konstruktion beansprucht viel Platz in axialer wie radialer Richtung und ist aus vielen Einzelteilen zusammengesetzt.

Die DE-A 196 40 146 zeigt eine Radnabe mit direkter Lamellenbremse, bei welcher die Innenlamellen drehfest mit einem Planetenträger verbunden sind und fest stehen. Der Planetenträger ist ortsfest an einer Achsbrücke festgelegt. Die drehbar angeordneten Außenlamellen greifen in eine Verzahnung eines Hohlrades ein. Das innere Zentralrad bildet den Antrieb und das Hohlrad den Abtrieb. Da der Planetenträger drehfest gehalten ist, wird mit dieser Anordnung nicht die größtmögliche Übersetzung erreicht.

Die GB 2 220 178 A offenbart einen elektrischen Einzelradantrieb mit einem Planetenreduziergetriebe, bei welchem ein Elektromotor das Sonnenrad antreibt, das Hohlrad drehfest gehalten und der Planetenträger mit einer Abtriebswelle drehfest verbunden ist. Mit der Abtriebswelle sind drehende Lamellen einer Lamellenbremse verbunden, wobei die stehenden Lamellen der Lamellenbremse mit einem feststehenden Gehäuseteil verbunden sind.

Der Erfindung,ausgehend von der gattungsgemäßen DE-A 3 832 649, liegt die Aufgabe zugrunde, ein Fahrzeuggetriebe zu schaffen, das in axialer wie radialer Richtung wenig Platz beansprucht, aus wenig Teilen aufgebaut ist, und eine zu kühlende Bremse darin zu integrieren. Es sollte vorzugsweise den Innenraum einer Radfelge optimal ausnützen.

Diese Aufgabe wird mit einem, auch die kennzeichnenden Merkmale des Hauptanspruchs aufweisenden, gattungsgemäßen Fahrzeuggetriebe gelöst.

Das Fahrzeuggetriebe ist ein Planetengetriebe mit einem Sonnenrad als Eintrieb, mindestens einem Planetenrad, und einem feststehenden Hohlrad. Das Planetenrad oder die Planetenräder sind auf einem Planetenträger gelagert, der als Abtrieb einen Abtriebsflansch zur Halterung eines Rades treibt. In diesem Getriebe ist eine als flüssigkeitsgekühlte Mehrscheiben-Bremse ausgebildete Lamellenbremse integriert. Dabei haltert der Planetenträger an seinem radial äußeren Bereich die inneren, sich mit der Raddrehzahl drehenden Bremslamellen.

In einer vorteilhaften Ausgestaltung der Erfindung weist der Planetenträger oder ein den Planetenträger beinhaltendes Verbundbauteil einen in Richtung Rad zeigenden Zapfen auf. Vorzugsweise leitet der Zapfen über eine Mitnahmeverzahnung das Drehmoment auf den Abtriebsflansch über. Vorteilhafterweise nimmt der Abtriebsflansch eine Felge auf. Er trägt vorzugsweise eine Dichtung, die das Gehäuse des Fahrzeuggetriebes abdichtet. Der Abtriebsflansch ist vorteilhaft in einer die Radlagerung bildenden Lagerung geführt. Über den Abtriebsflansch ist damit mittelbar der Planetenträger an seinen Zapfen gelagert. Die Länge des Zapfens gibt ungefähr die Breite der Lagerbasis an. Der Abtriebsflansch ist vorzugsweise durch eine zentrale oder mehrere von außen zugängliche Schrauben über wahlweise einen Gegenhalter oder direkt axial mit dem Planetenträger bzw. seinem Zapfen verspannt. Der Vorteil dieser Konstruktion ist, dass nach Lösen der Verschraubung der Abtriebsflansch einfach nach außen abziehbar ist. Als weiterer Vorteil wird bei dieser Verschraubung das Lagerspiel eingestellt. Dabei kann der gesonderte Montageaufwand der Lagereinstellung entfallen.

In einer vorteilhaften Ausgestaltung der Erfindung ist das Fahrzeuggetriebe in einem Radkopf untergebracht. Das Hohlrad ist vorzugsweise in einem Nabenträger abgestützt. In einer technischen Variante hierzu bildet das Hohlrad einen Ringflansch, über den das Drehmoment in das Achsbrückengehäuse eingeleitet wird. Vorzugsweise ist dieser Radkopf an die trichterförmige Erweiterung des Achsbrückengehäuses angeschlossen, bevorzugt über einen großen Lochkreis. Dabei kann das auf das Hohlrad wirkende Drehmoment durch die Befestigung des Hohlrades an Gußaugen der trichterförmigen Erweiterung des Achsbrückengehäuses abgestützt werden. Alternativ dazu kann das auf das Hohlrad wirkende Drehmoment von dem Radkopf aufgenommen werden, der wiederum am Achsbrückengehäuse befestigt ist. In einer weiteren technischen Variante bildet das Hohlrad einen Ringflansch, der zwischen Radkopf und dem Achsbrückengehäuse befestigt ist.

In einer vorteilhaften Ausgestaltung der Erfindung ist das Kühlflüssigkeitzirkulationssystem zur Kühlung der Bremslamellen ausgebildet. Durch Bohrungen im Planetenträger und/oder Nutung und/oder Sicken an dessen Außendurchmesser auf der Seite der Bremslamellen gelangt Kühlmittel an die Bremslamellen. Aus der Zentrifugalbeschleunigung ergibt sich eine Förderwirkung. Die Bremslamellen sind vorteilhaft von Nuten durchzogen, durch die das Kühlmittel auch bei anliegenden Lamellen strömen kann. Kanäle und/oder Aussparungen in den äußeren Bremslamellen, in dem Hohlrad und/oder einem Nabenträger ermöglichen den Abfluß des Kühlmittels. Die Nuten in den inneren Bremslamellen verlaufen bevorzugt in erster Näherung radial. Dadurch erfährt das Kühlmittel eine weitere Zentrifugalbeschleunigung. Das Kühlmittel wird dabei an den radial äußeren Rand des Lamellenpakets geschleudert. Die Kanäle oder Aussparungen in den äußeren Bremslamellen zum Rückfluß des Kühlmittels verlaufen bevorzugt axial. In der technischen Variante, bei der das Hohlrad an Gußaugen einer trichterförmigen Erweiterung des Achsbrückengehäuses befestigt ist, kann das Kühlmittel im Umfangsbereich zwischen den Gußaugen zwischen dem radial äußeren Rand des Hohlrades und dem Achsbrückengehäuse durchströmen. Mittels eines trichterförmigen Blechs wird vorteilhaft ein Kurzschluß von zu- und ablaufendem Kühlmittel des Kühlflüssigkeitzirkulationsystems in der Nähe des Planetenträgers vermieden.

Vorzugsweise ist ein als Bremskolben wirkender Ringkolben konzentrisch zur Radlagerung angeordnet.

In einer anderen vorteilhaften Ausgestaltung der Erfindung sind mehrere als Bremskolben wirkende Einzelkolben achsparallel rund um die Radlagerung angeordnet.

In einer vorteilhaften Ausgestaltung der Erfindung können der oder die Bremskolben bei Verschleiß der Bremse nachgestellt werden, vorzugsweise durch eine stirnseitige Schraube. Die Zuleitungen des oder der Bremskolben sind vorteilhaft am Außendurchmesser eines Nabenträgers angeordnet. Vorzugsweise wird der Verschleiß der Bremslamellen über einen Bremskolbenrücken von außen oder über eine radiale Bohrung in einem Nabenträger oder von der Seite einer Achsbrücke jeweils über eine Verschlußschraube gemessen. Der oder die Bremskolben werden vorteilhaft mittels Federn zurückgestellt. Dabei sind die Rückstellfedern vorzugsweise zwischen der kolbenseitig letzten der äußeren Bremslamellen an Augen an dem radial äußeren Rand der Bremslamellen angebracht. Die Rückstellfedern stützen sich am anderen Ende an einem drehfesten Bauteil des Radkopfs ab.

In einer anderen, zum oben beschriebenen Radkopfgetriebe alternativen Ausgestaltung der Erfindung ist das Fahrzeuggetriebe in einem Achsbrückengehäuse neben einem Ausgleichgetriebe untergebracht.

In Zeichnungen sind Ausführungsbeispiele der Erfindung dargestellt. Es zeigen:
- Figur 1: ein in einem Endabtrieb als Planetengetriebe ausgestaltetes Fahrzeuggetriebe;
- Figur 2: eine technische Variante hierzu.

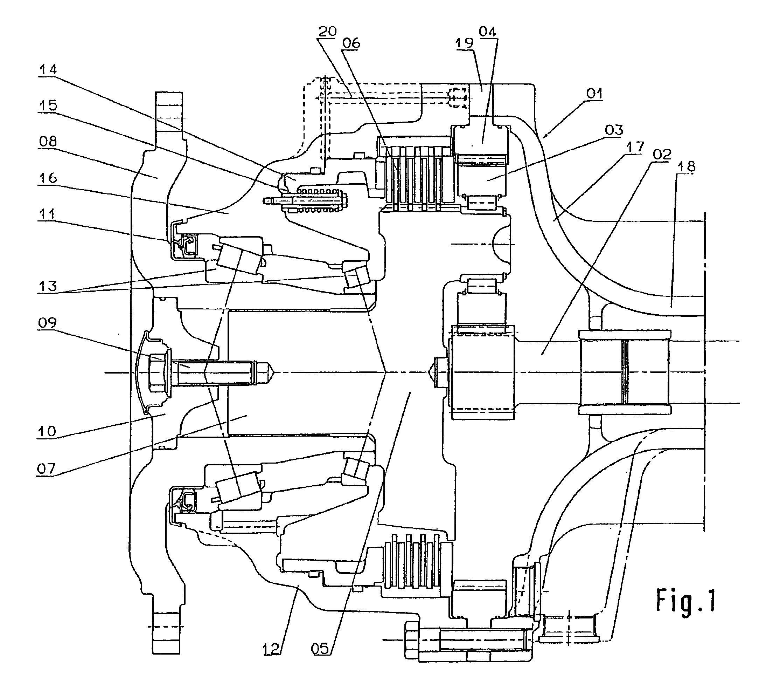

Die Figur 1 zeigt ein in einem Endabtrieb als Planetengetriebe ausgestaltetes Fahrzeuggetriebe 1. Ein Sonnenrad 2 treibt über mindestens ein Planetenrad 3, das auf einem feststehenden Hohlrad 4 abrollt, einen Planetenträger 5. Dieser haltert an seinem radial äußeren Bereich die inneren Bremslamellen 6 einer flüssigkeitsgekühlten Mehrscheiben-Bremse. Der Planetenträger 5 weist einen axial nach außen, d. h. in Richtung Rad zeigenden Zapfen 7 auf, der über eine Mitnahmeverzahnung das Abtriebsdrehmoment auf den Abtriebsflansch 8 überleitet. Dieser ist durch eine zentrale, von außen zugängliche Schraube 9 über einen Gegenhalter 10 axial mit dem Planetenträger 5 an seinem Zapfen 7 verspannt. Der Abtriebsflansch 8 nimmt eine - nicht dargestellte - Felge auf. Er trägt eine Dichtung 11, die das Gehäuse 12 des Fahrzeuggetriebes 1 abdichtet. Er ist in einer die Radlagerung bildenden Lagerung 13 geführt. Die Schraube 9 verspannt den Abtriebsflansch 8 mit dem Planetenträger 5. Ein Ringkolben 14, der konzentrisch zur Mittelachse des Fahrzeuggetriebes 1 angeordnet ist, wirkt als Bremskolben auf die Bremslamellen 6. Erwird von Federn 15 zurückgestellt. Das Gehäuse 12 des Fahrzeuggetriebes 1 ist derart untergliedert, daß ein Bauteil 16 die Radlagerung und die äußeren, stehenden Bremslamellen 6 aufnimmt. Das Gehäuse 12 des Fahrzeuggetriebes 1 ist über einen großen Lochkreis an eine trichterförmige Erweiterung 17 eines Achsbrückengehäuses 18 angeschlossen. Dabei ist das Hohlrad 4 als Ringflansch 19 ausgebildet, der zwischen dem Gehäuse 12 des Fahrzeuggetriebes 1 und dem Achsbrückengehäuse 18 angeordnet ist und zusammen mit dem Gehäuse 12 des Fahrzeuggetriebes 1 am Achsbrückengehäuse 18 angeschraubt ist. Die Zuleitung 20 des Bremskolbens ist am Außendurchmessers des als Nabenträger wirkenden Gehäuses 12 angeordnet.

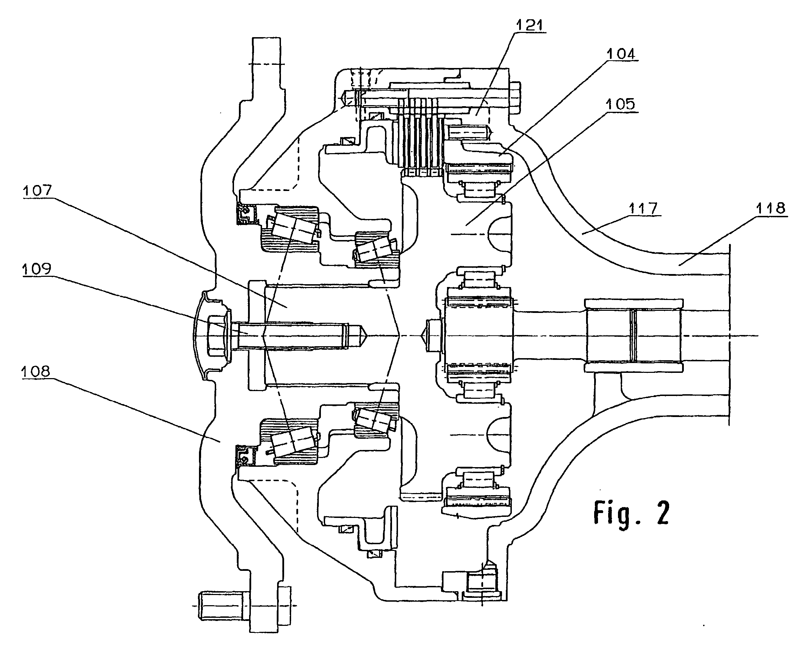

Die Figur2 zeigt eine technische Variante dieses in einem Endabtrieb als Planetengetriebe ausgestalteten Fahrzeuggetriebes 1. Dabei ist der Abtriebsflansch 108 durch eine zentrale, von außen zugängliche Schraube 109 unmittelbar axial mit dem Planetenträger 105 an seinem Zapfen 107 verspannt. In dieser technischen Variante ist das Hohlrad 104 direkt an Gußaugen 121 des Achsebrückengehäuses 118 befestigt. Das auf das Hohlrad 104 wirkende Drehmoment wird dabei über Paßhülsen abgestützt, die in Bohrungen des Hohlrades 104 und der Gußaugen 121 des Achsbrückengehäuses 118 eingesteckt sind.

### Bezugszeichenliste

- 1: Fahrzeuggetriebe
- 2: Sonnenrad
- 3: Planetenrad
- 4: Hohlrad
- 5: Planetenträger
- 6: Bremslamellen
- 7: Zapfen
- 8: Abtriebsflansch
- 9: Schraube
- 10: Gegenhalter
- 11: Dichtung
- 12: Gehäuse
- 13: Lagerung
- 14: Ringkolben
- 15: Rückzugsfedern
- 16: Bauteil
- 17: trichterförmige Erweiterung
- 18: Achsbrückengehäuse
- 19: Ringflansch
- 20: Zuleitung
- 104: Hohlrad
- 105: Planetenträger
- 107: Zapfen
- 108: Abtriebs flansch
- 109: Schraube
- 117: trichterförmige Erweiterung
- 118: Achsbrückengehäuse
- 121: Gußaugen

## Patentansprüche

1. Fahrzeuggetriebe (1) mit einem Sonnenrad (2) als Antrieb, mindestens einem Planetenrad (3), einem feststehenden Hohlrad (4, 104), einem Planetenträger (5, 105) als Abtrieb, einem Abtriebsflansch (8, 108) zur Halterung eines Rades und einer Lamellenbremse, welche durch Betätigung mindestens eines Bremskolbens (14) über eine Zuleitung (20) im Schließsinne betätigbar ist und welche als in das Fahrzeuggetriebe integrierte flüssigkeitsgekühlte Mehrscheibenbremse ausgebildet ist, **dadurch gekennzeichnet, dass**
- die inneren drehenden Lamellen an dem radial äußeren Bereich des Planetenträgers und dem mindestens einem Planetenrad axial benachbart gehaltert sind und sich mit Raddrehzahl drehen;
- die äußeren Lamellen in einem feststehenden Gehäuseteil (16) gehaltert sind, wobei sich aus der Zentrifugalbeschleunigung der sich drehenden Lamellen eine Förderwirkung für die Kühlflüssigkeit ergibt, wodurch die Kühlflüssigkeit an den radial äußeren Rand des Lamellenpaketes geschleudert wird und über axial verlaufende Kanäle zurückfließt; und
- das feststehende Gehäuseteil (16) die Radlagerung und das Drehmoment der äußeren stehenden Lamellen aufnimmt und mit einer trichterförmigen Erweiterung (17, 117) eines Achsbrückengehäuses (18, 118) in Verbindung steht.

2. Fahrzeuggetriebe (1) nach Anspruch 1, **dadurch gekennzeichnet, dass** der Planetenträger (5, 105) oder ein den Planetenträger (5, 105) beinhaltendes Verbundbauteil einen in Richtung Rad zeigenden Zapfen (7, 107) aufweist.

3. Fahrzeuggetriebe (1) nach Anspruch 2, **dadurch gekennzeichnet, dass** der Zapfen (7, 107) über eine Mitnahmeverzahnung das Drehmoment auf den Abtriebsflansch (8, 108) überleitet.

4. Fahrzeuggetriebe (1) nach Anspruch 1, **dadurch gekennzeichnet, dass** der Abtriebsflansch (8, 108) eine Felge aufnimmt, eine Dichtung (11) trägt, die das Gehäuse (12) des Fahrzeuggetriebes (1) abdichtet, und in einer die Radlagerung bildenden Lagerung (13) geführt ist.

5. Fahrzeuggetriebe (1) nach Anspruch 1 bis 4, **dadurch gekennzeichnet, dass** der Abtriebsflansch (8, 108) durch eine zentrale oder mehrere von außen zugängliche Schrauben (9, 109) wahlweise direkt oder über einen Gegenhalter (10) axial mit dem Planetenträger (5, 105) bzw. seinem Zapfen (7, 107) verspannt ist.

6. Fahrzeuggetriebe (1) nach Anspruch 1, **dadurch gekennzeichnet, dass** es in einem Radkopf untergebracht ist und dass das Hohlrad (4, 104) in einem Nabenträger abgestützt ist oder einen Ringflansch (19) bildet, über den das Drehmoment in das Achsbrückengehäuse (18, 118) eingeleitet wird.

7. Fahrzeuggetriebe (1) nach Anspruch 1, **dadurch gekennzeichnet, dass** der Radkopf an die trichterförmige Erweiterung (17, 117) des Achsbrückengehäuses (18, 118) über einen großen Lochkreis in dieser trichterförmigen Erweiterung (17, 117) angeschlossen ist, wobei das auf das Hohlrad (4, 104) wirkende Drehmoment über den Radkopf oder durch die Befestigung des Hohlrades (104) an Gußaugen (121) der trichterförmigen Erweiterung (117) des Achsbrückengehäuses (118) abgestützt wird oder das Hohlrad (4) einen Ringflansch (19) bildet, der zwischen Radkopf und dem Achsbrückengehäuse (18) befestigt ist.

8. Fahrzeuggetriebe (1) nach Anspruch 1, **dadurch gekennzeichnet, dass** das Gehäuseteil (16) auch das Hohlrad aufnimmt.

9. Fahrzeuggetriebe (1) nach Anspruch 1, **dadurch gekennzeichnet , dass** ein Kühlflüssigkeitzirkulationssystem mittels Bohrungen im Planetenträger (5, 105) und/oder Nutung und/oder Sicken an dessen Außendurchmesser auf der Seite der Bremslamellen (6) und/oder Nuten in den Bremslamellen (6) und/oder Kanälen und/oder Aussparungen in den äußeren Bremslamellen und/oder dem Hohlrad (4, 104) und/oder einem Nabenträger ausgebildet ist.

10. Fahrzeuggetriebe (1) nach Anspruch 7 und 9, **dadurch gekennzeichnet, dass** der Rückfluß des Kühlmittels des Kühlflüssigkeitzirkulationssystems von der radial äußeren Seite der Bremslamellen (6) im Bereich der trichterförmigen Erweiterung (117) des Achsbrückengehäuses (118) zwischen den Gußaugen erfolgt.

11. Fahrzeuggetriebe (1) nach Anspruch 9 oder 10, **dadurch gekennzeichnet, dass** mittels eines trichterförmigen Blechs ein Kurzschluß von zu- und ablaufendem Kühlmittel des Kühlflüssigkeitzirkulationssystems in der Nähe des Planetenträgers (5, 105) vermieden wird.

12. Fahrzeuggetriebe (1) nach Anspruch 1, **dadurch gekennzeichnet, dass** der Bremskolben als Ringkolben (14) konzentrisch zur Radlagerung angeordnet ist.

13. Fahrzeuggetriebe (1) nach Anspruch 1, **dadurch gekennzeichnet, dass** mehrere als Bremskolben wirkende Einzelkolben achsparallel rund um die Radlagerung angeordnet sind.

14. Fahrzeuggetriebe (1) nach Anspruch 12 oder 13, **dadurch gekennzeichnet, dass** der oder die Bremskolben bei Verschleiß der Bremse nachgestellt werden können, insbesondere durch eine stirnseitige Schraube.

15. Fahrzeuggetriebe (1) nach Anspruch 12 oder 13, **dadurch gekennzeichnet, dass** die Zuleitungen (20) zu dem oder den Bremskolben am Außendurchmesser eines Nabenträgers angeordnet sind.

16. Fahrzeuggetriebe (1) nach Anspruch 12 oder 13, **dadurch gekennzeichnet, dass** der Verschleiß der Bremslamellen (6) über einen Bremskolbenrücken von außen oder über eine radiale Bohrung in einem Nabenträger oder von der Seite einer Achsbrücke jeweils über eine Verschlußschraube gemessen wird.

17. Fahrzeuggetriebe (1) nach Anspruch 12 oder 13, **dadurch gekennzeichnet, dass** der oder die Bremskolben mittels Federn zurückgestellt werden.

18. Fahrzeuggetriebe (1) nach Anspruch 17, **dadurch gekennzeichnet, dass** die Rückstellfedern vorzugsweise zwischen der kolbenseitig letzten der äußeren Bremslamellen an Augen an dem radial äußeren Rand der Bremslamellen angebracht sind und sich am anderen Ende an einem drehfesten Bauteil des Radkopfs abstützen.

19. Fahrzeuggetriebe (1) nach Anspruch 1, **dadurch gekennzeichnet, dass** es in dem Achsbrückengehäuse (18, 118) neben einem Ausgleichgetriebe untergebracht ist.

## Claims

1. Vehicle transmission (1) with a sun gear (2) as the input, at least one planet gear (3), a stationary ring gear (4, 104), a planet spider (5, 105) as the output, an output flange (8, 108) to hold a gear and a multi-disc brake which can be actuated by activating at least one brake piston (14) via a feed line (20) operating in a closing direction and which is arranged in the form of a liquid-cooled multi-disc brake integrated in the vehicle transmission and **characterized in that**
- the internally rotating discs are axially retained against the outer radial area of the planet spider and against at least one neighbouring planet gear and rotate at wheel speed;
- the outer discs are mounted in a stationary section of the housing (16) where displacement action for the cooling fluid is generated by centrifugal acceleration causing the cooling fluid to be thrown onto the outer radial edge of the multi-disc pack after which it flows back through axially arranged ducts; and **in that**
- the stationary section of housing (16) absorbs the wheel mounting and the torque of the outer discs and is connected to a funnel-shaped extension (17, 117) in an axle bridge housing (18, 118).

2. Vehicle transmission (1) in accordance with Claim 1,
**characterized in that** the planet carrier (5, 105) or a composite component containing the planet carrier (5,105) features a journal (7, 107) pointing towards the gear.

3. Vehicle transmission (1) in accordance with Claim 2,
**characterized in that** the journal (7, 107) transmits torque to the output flange (8, 108) via a spline.

4. Vehicle transmission (1) in accordance with Claim 1,
**characterized in that** the output flange (8, 108) accommodates a rim and is fitted with a gasket (11) which seals the housing (12) of the vehicle transmission (1) and which is installed in a mounting (13) which forms the wheel mounting.

5. Vehicle transmission (1) in accordance with Claims 1 to 4,
**characterized in that** the output flange (8, 108) is secured to the planet spider (5, 105) by one central screw or by several externally accessible screws (9,109), being secured either directly or via a counter-support (10) axially to the planet spider (5, 105) or to its journal (7, 107).

6. Vehicle transmission (1) in accordance with Claim 1,
**characterized in that** it is installed in a wheel head and that the ring gear (4, 104) is supported in a hub carrier or that it forms a ring flange (19) through which torque is transmitted into the axle bridge housing (18).

7. Vehicle transmission (1) in accordance with Claim 1,
**characterized in that** the wheel head is connected to the funnel-shaped extension (17, 117) on the axle bridge housing (18, 118) via a large hole pattern in this funnel-shaped extension (17, 117) and where the torque being exerted on the (4,104) via the wheel head or through activation of the ring gear (104) is supported against cast lugs (121) on the funnel-shaped extension (117) on the axle bridge housing (118) or where the ring gear (4) forms a ring flange (19) which is secured between the wheel head and the axle bridge housing (18).

8. Vehicle transmission (1) in accordance with Claim 1,
**characterized in that** the housing section (16) also contains the ring gear.

9. Vehicle transmission (1) in accordance with Claim 1,
**characterized in that** a coolant circulation system is arranged with bores in the planet spider (5,105) and/or grooves and/or notches around its outer diameter on the side of the brake discs (6) and/or grooves in the brake discs (6) and/or ducts and/or recesses in the outer brake discs and/or the ring gear (4, 104) and/or a hub carrier.

10. Vehicle transmission (1) in accordance with Claims 7 and 9,
**characterized in that** the return flow of coolant from this coolant occurs from the outer radial side of the brake discs (6) beside the funnel-shaped extension (117) of the axle bridge housing (118) between the cast lugs.

11. Vehicle transmission (1) in accordance with Claims 9 or 10,
**characterized in that** short circuits of incoming and outgoing coolant from the coolant recirculating system beside the planet carrier (5, 105) is prevented by means of a funnel-shaped plate.

12. Vehicle transmission (1) in accordance with Claim 1,
**characterized in that** the brake piston is arranged as a ring piston (14) which is concentrically arranged around the wheel mounting.

13. Vehicle transmission (1) in accordance with Claim 1,
**characterized in that** the brake piston features several axially parallel individual pistons arranged round the wheel mounting and acting as brake pistons.

14. Vehicle transmission (1) in accordance with Claim 12 or 13,
**characterized in that** the brake piston or brake pistons is/are adjusted in the event of brake wear, in this particular case by means of a screw located in the face end.

15. Vehicle transmission (1) in accordance with Claim 12 or 13,
**characterized in that** the supply lines (20) are arranged against the brake piston or brake pistons on the outer diameter of a hub carrier.

16. Vehicle transmission (1) in accordance with Claim 12 or 13,
**characterized in that** wear on the brake discs (6) is measured either from outside by means of the back of a brake piston or by a radial bore in a hub carrier or from the side of an axle bridge, in each case using a screw plug.

17. Vehicle transmission (1) in accordance with Claim 12 or 13,
**characterized in that** the brake piston or brake pistons can be reset by means of springs.

18. Vehicle transmission (1) in accordance with Claim 17,
**characterized in that** the recoil springs in a preferred embodiment are arranged between the last outer brake disc on the piston side on lugs located on the outer radial edge of the brake discs and are supported on the outer end against a stationary component of the wheel head.

19. Vehicle transmission (1) in accordance with Claim 1,
**characterized in that** it is housed in the axle bridge housing (18, 118) beside a differential.

## Revendications

1. Boîte de vitesses pour véhicules automobiles (1) dotée d'une roue planétaire (2) en tant que groupe de traction, d'au moins un satellite (3), d'une couronne fixe (4,104) et d'un arbre porte-satellites (5, 105) en tant que groupe sortie, d'un manchon de sortie (8, 108) en tant que support d'une roue et d'un frein à disques multiples, sachant que celui-ci peut être fermé par l'actionnement d'au moins un piston du frein (14) par l'intermédiaire d'une conduite d'amenée (20) et que celui-ci est conçu comme frein multidisques refroidi par liquide et intégré dans la boîte de vitesses pour véhicules automobiles, **caractérisée en ce que**
- les disques internes tournants sont fixés soit dans la zone radiale externe de l'arbre porte-satellites soit au moins dans le sens axial au niveau d'un satellite contigu, et **en ce que** ces disques internes tournent à la vitesse de roue ;
- les disques externes sont fixés dans une partie fixe du carter (16), sachant que du fait de l'accélération centrifuge des disques tournants résulte un effet de refoulement du liquide de refroidissement, et sachant que de ce fait le liquide de refroidissement est projeté contre le bord radial externe de l'ensemble des disques, et sachant qu'il y a un reflux du liquide de refroidissement à travers des canaux disposés dans le sens axial ; et
- **en ce que** dans la partie fixe du carter (16) est logé le palier de roue, sachant que cette partie fixe du carter (16) supporte le couple des disques fixes externes et **en ce que** cette partie fixe du carter (16) est liée à un évasement (17, 117) d'un carter du pont d'essieu (18, 118).

2. Boîte de vitesses pour véhicules automobiles (1) selon la revendication 1, **caractérisée en ce que** l'arbre porte-satellites (5,105) ou un élément composite comportant l'arbre porte-satellites (5, 105) est doté d'un tourillon (7, 107) dirigé vers la roue.

3. Boîte de vitesses pour véhicules automobiles (1) selon la revendication 2, **caractérisée en ce que** le tourillon (7, 107) transmet le couple au manchon de sortie (8, 108) par l'intermédiaire d'une denture d'entraînement.

4. Boîte de vitesses pour véhicules automobiles (1) selon la revendication 1, **caractérisée en ce que** dans le manchon de sortie (8,108) est logée une jante, **en ce qu'**il est doté d'un joint (11) pour garantir l'étanchéité du carter (12) de la boîte de vitesses pour véhicules automobiles (1) et **en ce que** ce manchon de sortie (8,108) est guidé dans un logement (13) formant le palier de roue.

5. Boîte de vitesses pour véhicules automobiles (1) selon une des revendications 1 à 4, **caractérisée en ce que** le manchon de sortie (8, 108) est serré - au moyen d'une vis centrale ou plusieurs vis (9, 109) accessibles de l'extérieur - de manière facultative, ou directement ou par l'intermédiaire d'un dispositif de support (10) axialement avec l'arbre porte-satellites (5, 105) et/ou son tourillon (7, 107).

6. Boîte de vitesses pour véhicules automobiles (1) selon la revendication 1, **caractérisée en ce qu'**elle est logée dans un moyeu de roue et **en ce que** la couronne (4, 104) est supportée dans un porte-moyeu ou **en ce qu'**elle forme une bride annulaire (19) par l'intermédiaire de laquelle le couple est induit dans le carter du pont d'essieu (18,118).

7. Boîte de vitesses pour véhicules automobiles (1) selon la revendication 1, **caractérisée en ce que** le moyeu de roue est connecté à l'évasement (17, 117) du carter du pont d'essieu (18, 118) par l'intermédiaire d'un grand diamètre de perçage réalisé dans cet évasement (17, 117), sachant que le couple agissant sur la couronne (4, 104) est supporté par le moyeu de roue ou par la fixation de la couronne (104) au niveau des bossages (121) de l'évasement (117) du carter du pont d'essieu (118), ou sachant que la couronne (4) forme une bride annulaire (19) fixée entre le moyeu de roue et le carter du pont d'essieu (18).

8. Boîte de vitesses pour véhicules automobiles (1) selon la revendication 1, **caractérisée en ce que** dans la partie du carter (16) est logée également la couronne.

9. Boîte de vitesses pour véhicules automobiles (1) selon la revendication 1, **caractérisée en ce qu'**elle est dotée d'un système de circulation du liquide de refroidissement réalisé au moyen de perçages dans l'arbre porte-satellites (5, 105) et/ou de cannelures et/ou de moulures sur son diamètre extérieur du côté des disques de frein (6) et/ou de cannelures dans les disques de frein (6) et/ou de canaux et/ou d'évidements dans les disques de frein extérieurs et/ou de la couronne (4,104) et/ou du porte-moyeu.

10. Boîte de vitesses pour véhicules automobiles (1) selon les revendications 7 et 9, **caractérisée en ce que** le reflux du réfrigérant du système de circulation du liquide de refroidissement a lieu du côté radial externe des disques de frein (6) et plus particulièrement entre les bossages dans la zone de l'évasement (117) du carter du pont d'essieu (188).

11. Boîte de vitesses pour véhicules automobiles (1) selon les revendications 9 ou10, **caractérisée en ce que** au moyen d'une tôle en entonnoir est inhibé, à proximité de l'arbe porte-satellites (5, 105), un court-circuit du réfrigérant arrivant ou s'écoulant vers le système de circulation du liquide de refroidissement.

12. Boîte de vitesses pour véhicules automobiles (1) selon la revendication 1, **caractérisée en ce que** le piston du frein est réalisé en tant que piston annulaire (14) et **en ce qu'**il est disposé concentriquement par rapport au palier de roue.

13. Boîte de vitesses pour véhicules automobiles (1) selon la revendication 1, **caractérisée en ce que** plusieurs pistons individuels agissant en tant que pistons du frein sont disposés parallèles à l'axe autour du palier de roue.

14. Boîte de vitesses pour véhicules automobiles (1) selon les revendications 12 ou 13, **caractérisée en ce que** le ou les pistons du frein peuvent être rajustés, en particulier au moyen d'une vis prévue sur la face frontale.

15. Boîte de vitesses pour véhicules automobiles (1) selon les revendications 12 ou 13, **caractérisée en ce que** les conduites d'amenée (20) du ou des pistons du frein sont disposées sur le diamètre extérieur du porte-moyeu.

16. Boîte de vitesses pour véhicules automobiles (1) selon les revendications 12 ou 13, **caractérisée en ce que** l'usure des disques de frein (6) est mesurée par l'intermédiaire d'un dos du piston de frein par l'extérieur ou par l'intermédiaire d'un alésage radial réalisé dans un porte-moyeu ou d'un côté d'un pont d'essieu respectivement au moyen d'une vis de fermeture.

17. Boîte de vitesses pour véhicules automobiles (1) selon les revendications 12 ou 13, **caractérisée en ce que** le ou les pistons du frein sont remis à leur position initiale au moyen de ressorts.

18. Boîte de vitesses pour véhicules automobiles (1) selon la revendication 17, **caractérisée en ce que** les ressorts de rappel sont montés, de préférence, entre le dernier des disques de frein externes du côté piston au niveau des bossages et au niveau du bord radial extérieur des disques de frein, et **en ce que** ces ressorts sont logés à l'autre extrémité dans un élément résistant à la torsion du moyeu de roue.

19. Boîte de vitesses pour véhicules automobiles (1) selon la revendication 1, **caractérisée en ce qu'**elle est logée dans le carter du pont d'essieu (18, 118) à côté du différentiel.
